# EUROPEAN PATENT SPECIFICATION

(11) **EP 2 399 728 B1**
(45) Date of publication and mention of the grant of the patent: **25.02.2015**
(21) Application number: 10167537.9
(22) Date of filing: 28.06.2010
(51) Int. Cl.: B29C 73/16, B29L 30/00

(54) **Device for sealing and inflating inflatable object**
Vorrichtung zum Versiegeln und Aufpumpen eines aufpumpbaren Objekts
Dispositif pour étanchéifier et gonfler un objet gonflable

(43) Date of publication of application: 28.12.2011
(73) Proprietor: Jhou, Wen-San, An-Din Hsiang, Tainan Hsien (TW)
(72) Inventor: Jhou, Wen-San, An-Din Hsiang, Tainan Hsien (TW)
(74) Representative: Dossmann, Gérard

(56) References cited:
- DE-B3-102008 015 022
- JP-A- 2000 108 215
- US-A1- 2005 284 536
- US-A1- 2006 217 662
- US-A1- 2008 029 181
- US-B1- 6 766 834

## Description

The present invention relates to an air compressor or a sealing and inflating assembly for sealing and inflating an inflatable object, and more particularly to an air compressing device including an improved tire repairing container for quickly coupling and attaching and securing to an outlet tube of the air compressor and for quickly disengaging from the air compressor and for allowing the tire sealing preparation to be effectively supplied to seal and inflate the inflatable objects. In particular, the present invention relates to a sealing an inflating inflating assembly according to the preamble of claim 1, such as it is for example known from US2005/284536A1, US2006/217662A1 or US2008/029181A1.

Various kinds of typical air compressing devices have been developed by the applicant and comprise a cylinder housing, a piston slidably received in the cylinder housing, and a motor coupled or attached to the cylinder housing and coupled to the piston for moving the piston relative to the cylinder housing in a reciprocating action, in order to generate a pressurized air of a greater air pressure and a decreased flowing quantity, and a pressure tight container for receiving a sealing preparation and for selectively supplying the sealing preparation to seal and inflate the inflatable objects, such as vehicle tires, air beds, air cushions, hovercrafts, etc.

For example, U.S. Patent No. 6,176,285 to Gerresheim et al., U.S. Patent No. 6,283,172 to Thurner, and U.S. Patent No. 6,345,650 to Paasch et al. disclose several of the typical preparations for the sealing of tires with punctures, and repairing apparatuses for the sealing and pumping up of tires and tires with an integrated sealing preparation comprising a pressure tight container that is coupled to a pressurized air cartridge.

However, the pressure tight container and the pressurized air cartridge are coupled together with a shut off valve, a gas outlet, a gas inlet and may not be easily disengaged from each other, and an outlet valve and an additional riser tube are further required to be attached to the upper portion of the pressure tight container for allowing the sealing preparation to be selectively supplied to seal and inflate the inflatable objects, but may not be easily connected or coupled to the air compressor devices.

U.S. Patent No. 6,454,892 to Gerresheim et al. and U.S. Patent No. 6,889,723 to Gerresheim et al. disclose two of the typical preparations for sealing punctured tires and apparatuses for the sealing and pumping up of tires, and each comprising a pressure tight container coupled to an air compressor, and a shut off valve and a gas inlet are coupled to the air compressor and the pressure tight container for supplying the pressurized air to force the sealing preparation to seal the inflatable objects.

However, the pressure tight container may not be easily removed from the air compressor, and the air compressor also may not be easily and quickly and directly coupled to the inflatable objects and to readily inflate the inflatable objects, such as tires, air beds, air cushions, hovercrafts, etc., in addition, the puncture sealant is required to flow through the shut off valve and the outlet valve.

U.S. Patent No. 7,021,348 to Eriksen et al. discloses a further typical device for sealing and inflating an inflatable object and comprising a tubular container coupled to an air compressor, and a complicated coupling structure is further required for coupling the tubular container to the air compressor.

However, similarly, the tubular container may not be easily and quickly removed from the air compressor, and the air compressor may not be easily and quickly and directly coupled to the inflatable objects and to inflate the inflatable objects, in addition, the puncture sealant is required to flow through the complicated coupling structure.

U.S. Patent No. 7,178,564 to Kojima et al. discloses a still further typical supplying/removing device of puncture sealant of tire and comprising a pressure resistant bottle coupled to an air compressor or a high pressure source, and a complicated coupling apparatus body is further required for coupling the pressure resistant bottle to the air compressor.

However, similarly, the pressure resistant bottle may not be easily removed from the air compressor, and the air compressor may not be easily and quickly and directly coupled to the inflatable objects and to inflate the inflatable objects, in addition, the puncture sealant is required to flow through the complicated coupling apparatus body.

The present invention has arisen to mitigate and/or obviate the afore-described disadvantages of the conventional air compressor devices and/or sealing and inflating devices for sealing and inflating the inflatable objects.

The primary objective of the present invention is to provide a sealing and inflating assembly comprising an air compressing device including an improved tire repairing container for quickly coupling and attaching and securing to an outlet tube of the air compressor and for quickly disengaging from the air compressor and for allowing the tire sealing preparation to be effectively supplied to seal and inflate the inflatable objects.

The other objective of the present invention is to provide a sealing and inflating assembly for sealing and inflating an inflatable object comprising a tire repairing container that may be easily and quickly and changeably attached and secured to the outlet tube of the air compressor. This objective is achieved by a sealing and inflating assembly according to independent claim 1. The dependent claims relate to advantageous embodiments.

Further objectives and advantages of the present invention will become apparent from a careful reading of the detailed description provided hereinbelow, with appropriate reference to the accompanying drawings.
FIG. 1 is a partial exploded view of a sealing and inflating assembly in accordance with the present invention;
FIG. 2 is a partial plan schematic view of the sealing and inflating assembly;
FIG. 3 is a perspective view of the tire repairing container of the sealing and inflating assembly;
FIG. 4 is another partial exploded view of the tire repairing container of the sealing and inflating assembly;
FIG. 5 is a partial cross sectional view illustrating a tire repairing container of the sealing and inflating assembly;
FIG. 6 is a partial cross sectional view similar to FIG. 5, illustrating the operation of the sealing and inflating assembly;
FIG. 7 is another partial cross sectional view similar to FIGS. 5 and 6, illustrating the other arrangement of the sealing and inflating assembly; and
FIG. 8 is a further partial cross sectional view similar to FIG. 7, illustrating the operation of the sealing and inflating assembly as shown in FIG. 7.

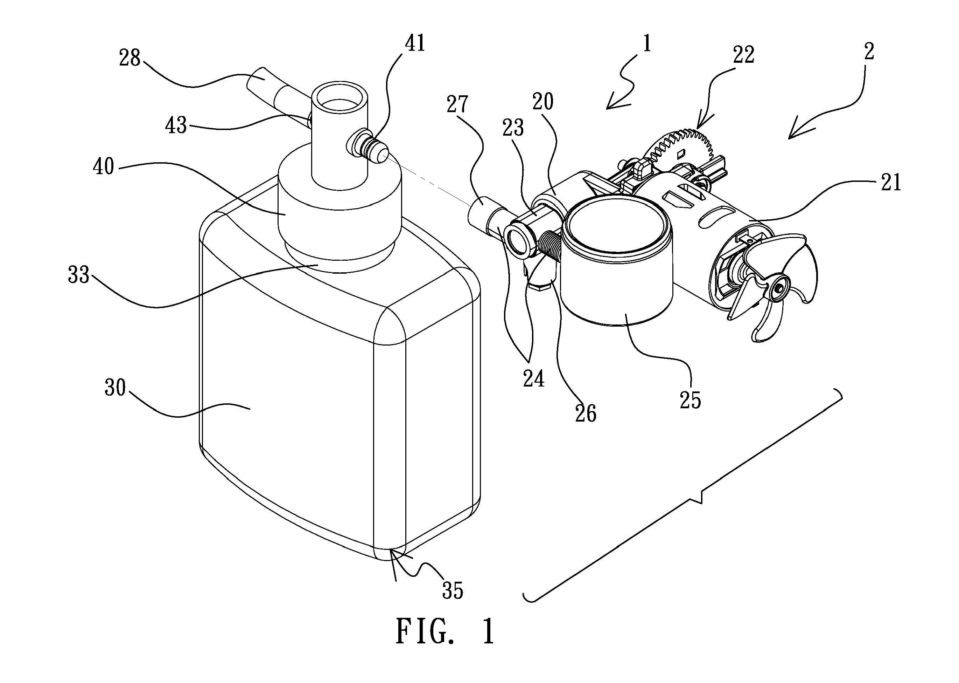

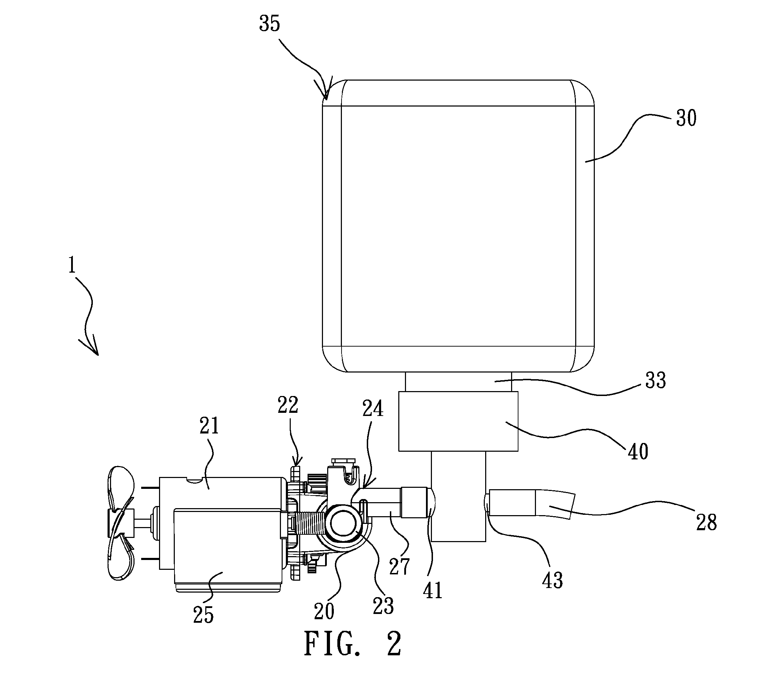

Referring to the drawings, and initially to FIGS. 1-2, a sealing and inflating assembly 1 in accordance with the present invention comprises an air compressing device 2 including a cylinder housing 20 for slidably receiving and attaching and securing a piston therein (not shown), a motor 21 attached and secured to the cylinder housing 20 and coupled to the piston and/or a piston rod (not shown) with an eccentric or gear coupling device 22 for moving the piston relative to the cylinder housing 20 in a reciprocating action, in order to generate a pressurized air of a relatively greater air pressure and a decreased flowing quantity. The above-described structure is typical and will not be described in further details.

Several examples of the typical air compressing devices or sealing and inflating devices are disclosed in the prior U.S. Patents which may be taken as the references for the present invention. For example, the cylinder housing 20 normally includes an outlet tube 23 extended outwardly therefrom and communicating with the cylinder housing 20 for receiving the pressurized air from the cylinder housing 20, and includes one or more (such as four) outlet ports 24 formed or provided or extended from the outlet tube 23 for coupling to various parts or elements or facilities, such as pressure gauges 25, nozzles or safety or relief valves 26, hoses 27 or the like, in which the hose 27 may be provided for coupling to various air facilities or inflatable objects (not shown), such as tires, air beds, air cushions, hovercrafts, etc.

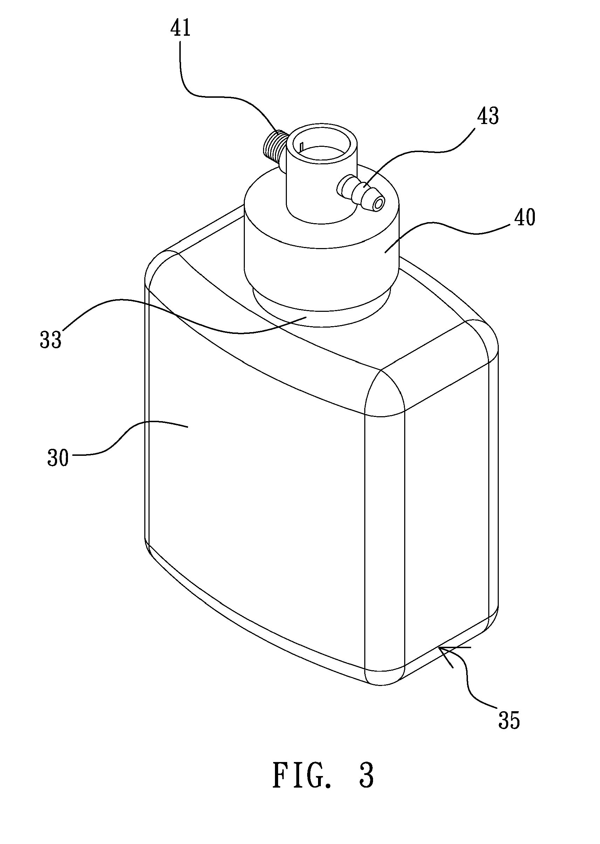

In the present invention, the hose 27 is provided for coupling to a tire repairing container 30 before coupling to the air facilities or inflatable objects (not shown), such as tires, air beds, air cushions, hovercrafts, etc. As shown in FIGS. 3-8, the tire repairing container 30 includes a compartment 31 formed therein for receiving a sealing preparation 32 and for selectively supplying the sealing preparation 32 to seal and inflate the inflatable objects, such as vehicle tires, air beds, air cushions, hovercrafts, etc., and includes a mouth opening 33 formed or provided on the upper or lower portion of the tire repairing container 30 for filling or discharging the sealing preparation 32 into or from the compartment 31 of the tire repairing container 30.

The tire repairing container 30 further includes an outlet mouth or piece 40 attached and secured to the mouth opening 33 of the tire repairing container 30 with latches or fasteners (not shown), adhesive materials or threading engagements 34, for blocking or enclosing the mouth opening 33 of the tire repairing container 30, the outlet piece 40 includes an entrance 41 for attaching or securing or coupling to one of the outlet ports 24 of the outlet tube 23 with the hose 27 for allowing the pressurized air from the cylinder housing 20 to be suitably supplied to the outlet piece 40 and then into the compartment 31 of the tire repairing container 30, and includes an inlet conduit 42 formed therein and communicative with the entrance 41 thereof for suitably guiding the pressurized air to flow through the outlet piece 40 and then into the compartment 31 of the tire repairing container 30.

The outlet piece 40 further includes an outlet conduit 43 formed therein and communicative with the compartment 31 of the tire repairing container 30, but offset from the entrance 41 thereof for allowing the sealing preparation 32 in the compartment 31 of the tire repairing container 30 to selectively flow out through the outlet conduit 43 of the outlet piece 40, for example, the outlet conduit 43 of the outlet piece 40 may be coupled to the air facilities or inflatable objects (not shown), such as tires, air beds, air cushions, hovercrafts, etc. with another hose 28, and thus for allowing the pressurized air to be suitably supplied into the compartment 31 of the tire repairing container 30, and then to force the sealing preparation 32 in the compartment 31 of the tire repairing container 30 to flow to and to inflate the inflatable objects or vehicle tires or the like.

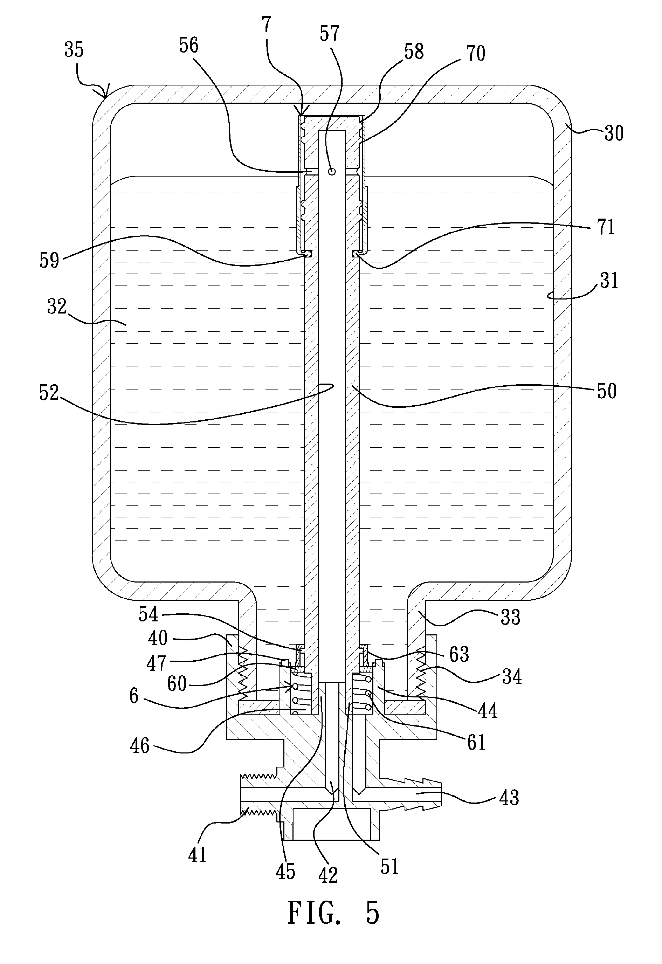

As shown in FIGS. 5-8, the outlet piece 40 includes a peripheral or cylindrical fence 44 extended therefrom, and includes a protruded stud 45 extended therefrom and located within the peripheral fence 44 for forming or defining a peripheral chamber 46 between the peripheral fence 44 and the stud 45 or a pipe 50, in which the inlet conduit 42 is formed through the stud 45 and offset from the peripheral chamber 46 of the outlet piece 40 for suitably guiding the pressurized air to flow through the inlet conduit 42 of the outlet piece 40 and then into the compartment 31 of the tire repairing container 30, and the peripheral chamber 46 of the outlet piece 40 is communicative with the outlet conduit 43 of the outlet piece 40 for suitably guiding the sealing preparation 32 in the compartment 31 of the tire repairing container 30 to selectively flow out through the outlet conduit 43 of the outlet piece 40.

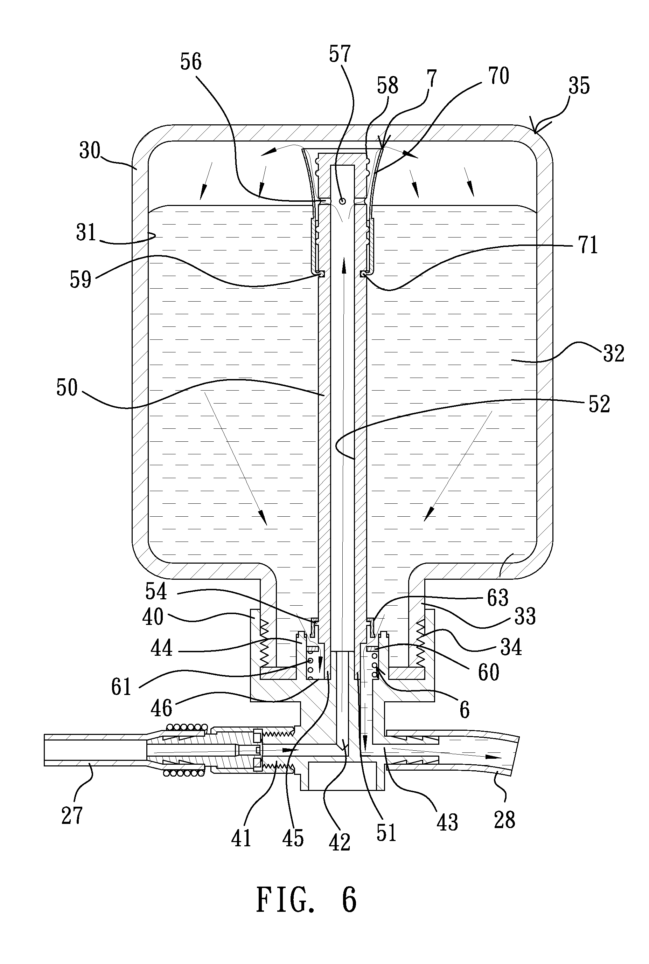

A pipe 50 is disposed in the compartment 31 of the tire repairing container 30, and includes one or first end or lower portion 51 attached or mounted or secured or coupled to the inlet conduit 42 of the outlet piece 40, such as coupled to the stud 45, and includes a bore 52 formed therein and communicative with the inlet conduit 42 of the outlet piece 40 for directing or guiding the pressurized air to flow through the bore 52 of the pipe 50 and then to flow into the lower or the upper or the base portion 35 of the compartment 31 of the tire repairing container 30, best shown in FIG. 6. It is preferable that the pipe 50 includes a narrowed one end or lower portion 51 thereof for forming a peripheral shoulder 53 in the one end or lower portion 51 of the pipe 50.

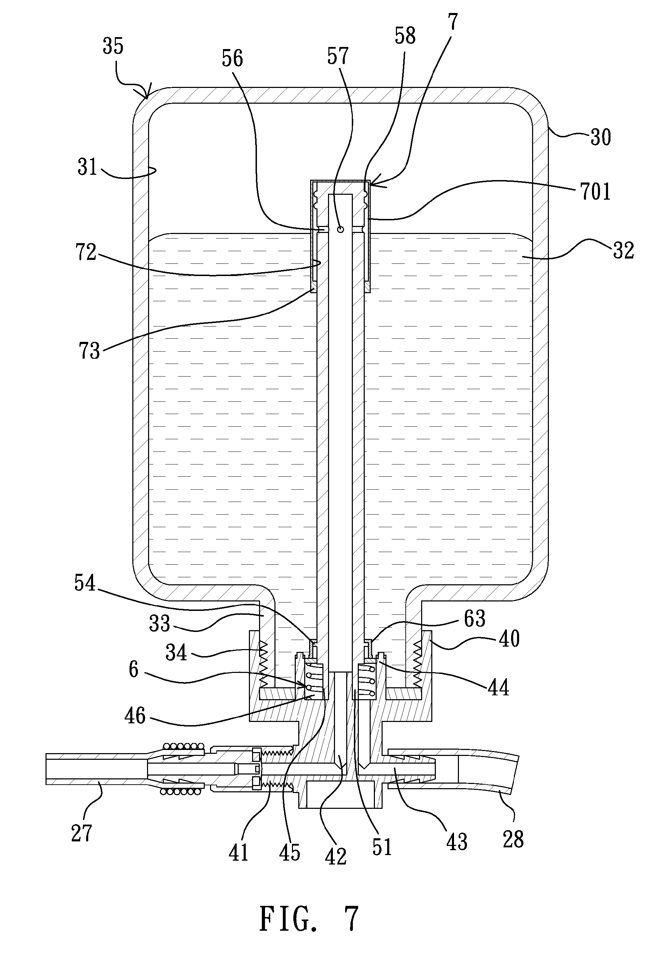

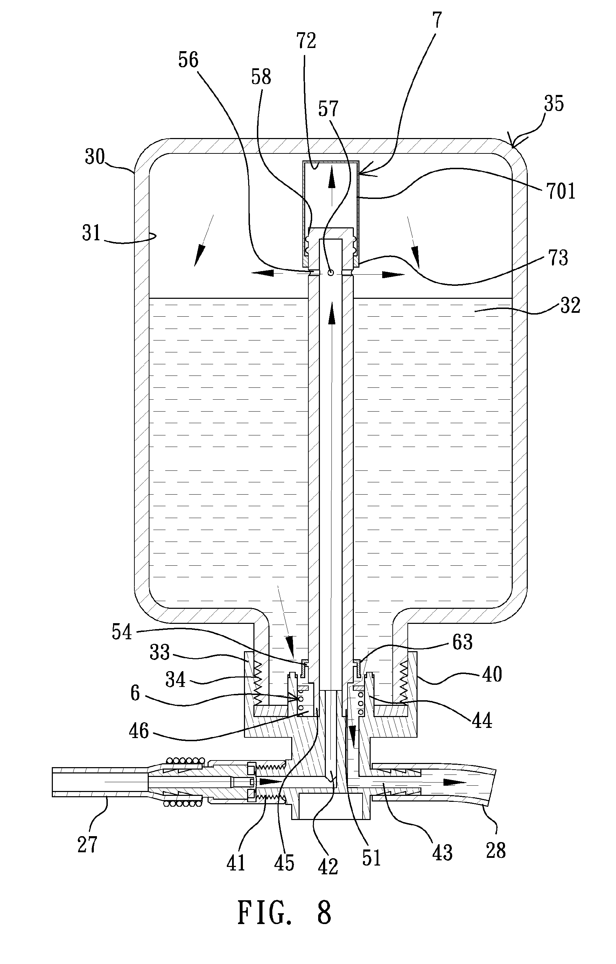

A check valve device 6 includes a ring-shaped stop member 60 slidably received or engaged in the peripheral chamber 46 of the outlet piece 40 and contactable or engageable with the peripheral shoulder 53 of the pipe 50 for selectively blocking or enclosing the peripheral chamber 46 of the outlet piece 40 (FIGS. 5, 7) and for preventing the sealing preparation 32 from flowing out through the outlet conduit 43 of the outlet piece 40. A spring-biasing member 61 is also received or engaged in the peripheral chamber 46 of the outlet piece 40 and engaged with the stop member 60 for biasing or forcing the stop member 60 to selectively engage with the peripheral shoulder 53 of the pipe 50 and to selectively block or enclose the peripheral chamber 46 of the outlet piece 40. The pressurized air supplied into the compartment 31 of the tire repairing container 30 may force the sealing preparation 32 to move the stop member 60 and to selectively open the peripheral chamber 46 of the outlet piece 40 (FIGS. 6, 8), and thus to allow the sealing preparation 32 to selectively flow out through the outlet conduit 43 of the outlet piece 40.

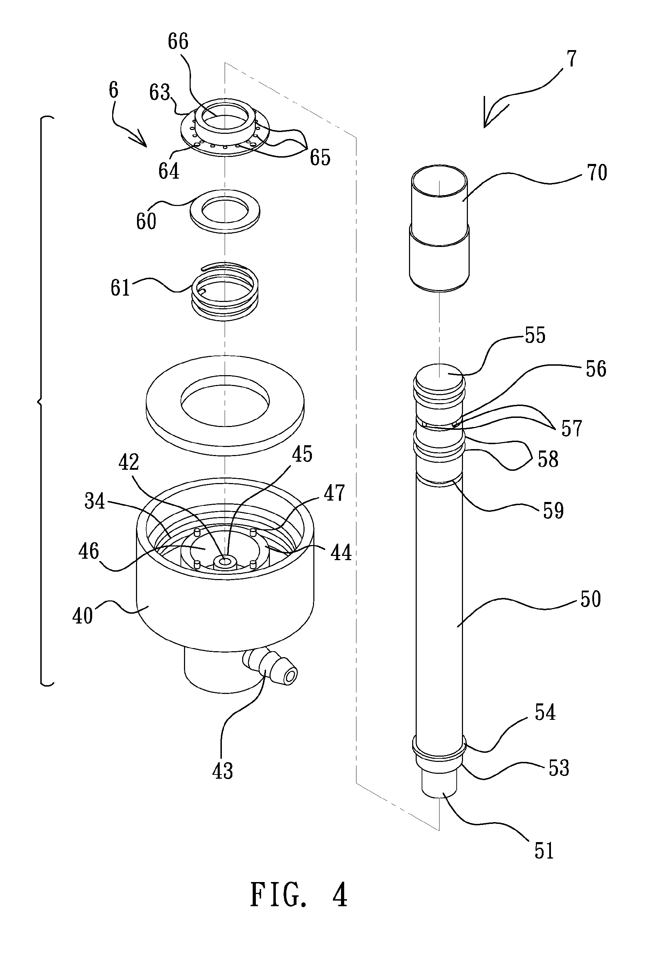

A cover 63 may further be provided and attached or mounted or secured to the peripheral fence 44 for selectively blocking or enclosing the peripheral chamber 46 of the outlet piece 40. For example, the outlet piece 40 includes one or more (such as four) projections or pegs 47 extended from the peripheral fence 44, and the cover 63 includes one or more (such as four) orifices 64 formed therein (FIG. 4) for receiving or engaging with the pegs 47 of the peripheral fence 44 and for anchoring or positioning or retaining the cover 63 to the peripheral fence 44 of the outlet piece 40. The cover 63 further includes a number of apertures 65 formed therein for communicating the compartment 31 of the tire repairing container 30 with the peripheral chamber 46 of the outlet piece 40.

The cover 63 may selectively block or enclose the peripheral chamber 46 of the outlet piece 40 when the stop member 60 is engaged with the peripheral shoulder 53 of the pipe 50, or when the stop member 60 is engaged with the cover 63. The cover 63 further includes a bore 66 formed therein for snugly receiving or engaging with the pipe 50. The pipe 50 may further include a peripheral rib 54 extended radially and outwardly therefrom for selectively engaging with the cover 63 and for anchoring or positioning or retaining the cover 63 between the pipe 50 and the peripheral fence 44 of the outlet piece 40, and thus for forming the check valve device 6 between the pipe 50 and the peripheral fence 44 of the outlet piece 40 or in the peripheral chamber 46 of the outlet piece 40.

The pipe 50 includes the other or second end or upper portion 55 having an enclosed or blind structure, and includes a peripheral recess 56 formed in the upper portion or other or second end 55 thereof, and includes one or more air perforations 57 formed therein and communicative with the peripheral recess 56 thereof and also communicative with the bore 52 of the pipe 50 for allowing the pressurized air to flow from the bore 52 of the pipe 50 and then to flow into the lower or the upper or the base portion 35 of the tire repairing container 30. The pipe 50 may further include one or more peripheral bulges 58 extended radially and outwardly therefrom, and located beside or above or below the peripheral recess 56 of the pipe 50, and may further include a peripheral groove 59 formed in the upper portion or other or second end 55 thereof and offset from the peripheral recess 56 and the peripheral bulges 58 of the pipe 50.

A check valve device 7 includes a soft or resilient or spring barrel or cylindrical member or sleeve 70 resiliently attached or mounted or secured or engaged onto the upper portion or other or second end 55 of the pipe 50 and engaged with the peripheral bulges 58 for selectively blocking or enclosing the air perforations 57 of the pipe 50, and includes a peripheral swelling 71 extended radially and inwardly from the sleeve 70 for selectively engaging with the peripheral groove 59 of the pipe 50 and for anchoring or positioning or retaining the sleeve 70 to the upper portion or other or second end 55 of the pipe 50, and the sleeve 70 includes a suitable resilience for allowing the pressurized air to selectively force or expand the sleeve 70 radially and outwardly (FIG. 6) and thus to allow the pressurized air to selectively flow into the lower or the upper or the base portion 35 of the tire repairing container 30, and the sleeve 70 may thus be formed as the check valve device 7 for allowing only the pressurized air to flow into the base portion 35 of the tire repairing container 30, and for preventing the sealing preparation 32 from flowing into the pipe 50.

Alternatively, as shown in FIGS. 7 and 8, the sleeve 701 of the check valve device 7 may selectively include an enclosed structure having a blind space 72 formed therein for slidably receiving the upper portion or other or second end 55 of the pipe 50 and for selectively blocking or enclosing the air perforations 57 of the pipe 50, and the sleeve 701 includes a sealing and sliding member 73 for slidably engaging with the pipe 50 and for selectively opening the air perforations 57 of the pipe 50 after the sealing and sliding member 73 of the sleeve 701 is moved over the peripheral recess 56 of the pipe 50 (FIG. 8), and thus for allowing the pressurized air to selectively flow through the air perforations 57 of the pipe 50, and then to selectively flow into the lower or the upper or the base portion 35 of the tire repairing container 30.

It is to be noted that the sleeve 70, 701 may act or may be formed as a check valve device 7 for controlling the pressurized air to flow into the base portion 35 of the tire repairing container 30 only, and for preventing the sealing preparation 32 from flowing into the pipe 50, and the stop member 60 may also act or may also be formed as a check valve device 6 for controlling the sealing preparation 32 to selectively flow out through the outlet conduit 43 of the outlet piece 40, such that the tire repairing container 30 may be positioned in any status, such as disposed laterally, or upside down, and the pressurized air may be controlled to flow into the base portion 35 of the tire repairing container 30 only, and the sealing preparation 32 may be controlled to flow out through the outlet conduit 43 of the outlet piece 40 only.

Accordingly, the sealing and inflating assembly includes an air compressing device including an improved tire repairing container for quickly coupling and attaching and securing to an outlet tube of the air compressor and for quickly disengaging from the air compressor and for allowing the tire sealing preparation to be effectively supplied to seal and inflate the inflatable objects, and for easily and quickly and changeably attaching and securing to the outlet tube of the air compressor.

## Claims

1. A sealing and inflating assembly (1) comprising:
an air compressor (2) including a cylinder housing (20) and a motor (21) coupled to said cylinder housing (20) for generating a pressurized air,
said cylinder housing (20) including an outlet tube (23) extended outwardly therefrom and communicating with said cylinder housing (20) for receiving the pressurized air from said cylinder housing (20), and including an outlet port (24) provided on said outlet tube (23),
a tire repairing container (30) including a compartment (31) formed therein for receiving a sealing preparation (32), and including a mouth opening (33) formed therein,
an outlet piece (40) attached and secured to said mouth (33) opening of said tire repairing container (30), and including an entrance (41) for coupling to said outlet port (24) of said outlet tube (23), and including an inlet conduit (42) formed therein and communicative with said entrance (41) thereof for guiding the pressurized air to flow through said outlet piece (40) and then into said compartment (31) of said tire repairing container (30), and including an outlet conduit (43) formed therein and communicative with said compartment (31) of said tire repairing container (30) and offset from said entrance (41) of said outlet piece (40) for allowing the sealing preparation (32) in said compartment (31) of said tire repairing container (30) to selectively flow out through said outlet conduit (43) of said outlet piece (40),
a pipe (50) disposed in said compartment (31) of said tire repairing container (30), and
including a first end (51) coupled to said inlet conduit (42) of said outlet piece (40), and
including a bore (52) formed therein and communicative with said inlet conduit (42) of said outlet piece (40) for directing and guiding the pressurized air to flow through said bore (52) of said pipe (50) and to flow into said compartment (31) of said tire repairing container (30), and
including a second end (55) having an air perforation (57) formed therein and communicative with said bore (52) of said pipe (50), and
a first check valve device (7) attached onto said second end (55) of said pipe (50) for controlling the pressurized air to selectively flow into said compartment (31) of said tire repairing container (30), and for preventing the sealing preparation (32) from flowing into said bore (52) of said pipe (50), **characterized in that**
said outlet piece (40) includes a second check valve device (6) disposed between said pipe (50) and said outlet conduit (43) of said outlet piece (40) for controlling the sealing preparation (32) to selectively flow out through said outlet conduit (43) of said outlet piece (40),
said outlet piece (40) includes a peripheral fence (44) extended therefrom for forming a peripheral chamber (46) between said peripheral fence (44) and said pipe (50), and
said second check valve device (6) includes a stop member (60) slidably received and
engaged in said peripheral chamber (46) of said outlet piece (40) for selectively blocking and enclosing said peripheral chamber (46) of said outlet piece (40) and for preventing the sealing preparation (32) from flowing out through said outlet conduit (43) of said outlet piece (40).

2. The sealing and inflating assembly as claimed in claim 1,
wherein said first check valve device (7) includes a resilient sleeve (70) attached onto said second end (55) of said pipe (50) for selectively blocking said air perforation (57) of said pipe (50).

3. The sealing and inflating assembly as claimed in claim 2,
wherein said pipe (50) includes a peripheral recess (56) formed in said second end (55) of said pipe (50) and communicative with said air perforation (57) of said pipe (50).

4. The sealing and inflating assembly as claimed in claim 2,
wherein said pipe (50) includes at least one peripheral bulge (58) extended radially and outwardly therefrom for engaging with said sleeve (70).

5. The sealing and inflating assembly as claimed in claim 2,
wherein said pipe (50) includes a peripheral groove (59) formed in said second end (55) of said pipe (50), and said sleeve (70) includes a peripheral swelling (71) extended radially and inwardly for selectively engaging with said peripheral groove (59) of said pipe (50) and for anchoring and retaining said sleeve (70) to said second end (55) of said pipe (50).

6. The sealing and inflating assembly as claimed in claim 1,
wherein said second check valve device (6) includes a spring-biasing member (61) received and engaged in said peripheral chamber (46) of said outlet piece (40) and engaged with said stop member (60) for biasing said stop member (60) to selectively block and enclose said peripheral chamber (46) of said outlet piece (40).

7. The sealing and inflating assembly as claimed in claim 1,
wherein said pipe (50) includes a peripheral shoulder (53) formed therein for selectively engaging with said stop member (60).

8. The sealing and inflating assembly as claimed in claim 1,
wherein said outlet piece includes at least one peg (47) extended from said peripheral fence (44), said outlet piece (40) further includes a cover (63) attached to said peripheral fence (44) for selectively blocking and enclosing said peripheral chamber (46) of said outlet piece (40), said cover (63) further includes at least one orifice (64) formed therein for engaging with said at least one peg (47) of said peripheral fence (46) and for anchoring and positioning said cover (63) to said peripheral fence (46) of said outlet piece (40), said cover (63) includes a plurality of apertures (65) formed therein for communicating said compartment (31) of said tire repairing container (30) with said peripheral chamber (46) of said outlet piece (43).

## Patentansprüche

1. Abdicht- und Aufpumpanordnung (1), welche umfasst:
einen Luftkompressor (2), der ein Zylindergehäuse (20) und einen mit dem Zylindergehäuse (20) gekoppelten Motor (21) aufweist, zum Erzeugen von Druckluft,
wobei das Zylindergehäuse (20) ein Auslassrohr (23) aufweist, das sich von ihm aus nach außen erstreckt und mit dem Zylindergehäuse (20) in Verbindung steht, um die Druckluft aus dem Zylindergehäuse (20) aufzunehmen, und einen an dem Auslassrohr (23) vorgesehenen Auslassanschluss (24) aufweist,
einen Reifenreparaturbehälter (30), der eine in ihm ausgebildete Kammer (31) zum Aufnehmen eines Abdichtmittels (32) aufweist und eine in ihm ausgebildete Mündungsöffnung (33) aufweist,
ein Auslassstück (40), das an der Mündungsöffnung (33) des Reifenreparaturbehälters (30) befestigt und gesichert ist und ein Eintrittsstück (41) zum Verbinden mit dem Auslassanschluss (24) des Auslassrohres (23) aufweist, und einen Einlasskanal (42) aufweist, der in ihm ausgebildet ist und mit seinem Eintrittsstück (41) in Verbindung steht, um die Druckluft so zu leiten, dass sie durch das Auslassstück (40) und danach in die Kammer (31) des Reifenreparaturbehälters (30) strömt, und einen Auslasskanal (43) aufweist, der in ihm ausgebildet ist und mit der Kammer (31) des Reifenreparaturbehälters (30) in Verbindung steht und zu dem Eintrittsstück (41) des Auslassstücks (40) versetzt ist, um zu ermöglichen, dass das Abdichtmittel (32) in der Kammer (31) des Reifenreparaturbehälters (30) selektiv durch den Auslasskanal (43) des Auslassstücks (40) ausströmt,
ein Rohr (50), das in der Kammer (31) des Reifenreparaturbehälters (30) angeordnet ist und ein erstes Ende (51) aufweist, das mit dem Einlasskanal (42) des Auslassstücks (40) gekoppelt ist, und eine Bohrung (52) aufweist, die in ihm ausgebildet ist und mit dem Einlasskanal (42) des Auslassstücks (40) in Verbindung steht, um die Druckluft so zu lenken und zu leiten, dass sie durch die Bohrung (52) des Rohres (50) strömt und in die Kammer (31) des Reifenreparaturbehälters (30) strömt, und ein zweites Ende (55) mit einer Luftperforierung (57) aufweist, die in ihm ausgebildet ist und mit der Bohrung (52) des Rohres (50) in Verbindung steht, und
eine erste Rückschlagventilvorrichtung (7), die an dem zweiten Ende (55) des Rohres (50) befestigt ist, um die Druckluft so zu steuern, dass sie selektiv in die Kammer (31) des Reifenreparaturbehälters (30) strömt, und um zu verhindern, dass das Abdichtmittel (32) in die Bohrung (52) des Rohres (50) fließt, **dadurch gekennzeichnet, dass**
das Auslassstück (40) eine zweite Rückschlagventilvorrichtung (6) aufweist, die zwischen dem Rohr (50) und dem Auslasskanal (43) des Auslassstücks (40) angeordnet ist, um das Abdichtmittel (32) so zu steuern, dass es selektiv durch den Auslasskanal (43) des Auslassstücks (40) ausfließt,
das Auslassstück (40) eine Umfangsbarriere (44) aufweist, die sich von ihm aus erstreckt, um eine Umfangskammer (46) zwischen der Umfangsbarriere (44) und dem Rohr (50) zu bilden, und
die zweite Rückschlagventilvorrichtung (6) ein Anschlagelement (60) aufweist, das in der Umfangskammer (46) des Auslassstücks (40) gleitend aufgenommen ist und in Gleiteingriff steht, um die Umfangskammer (46) des Auslassstücks (40) selektiv abzusperren und zu verschließen, und um zu verhindern, dass das Abdichtmittel (32) durch den Auslasskanal (43) des Auslassstücks (40) ausfließt.

2. Abdicht- und Aufpumpanordnung nach Anspruch 1,
wobei die erste Rückschlagventilvorrichtung (7) eine elastische Hülse (70) aufweist, die an dem zweiten Ende (55) des Rohres (50) befestigt ist, um die Luftperforierung (57) des Rohres (50) selektiv zu blockieren.

3. Abdicht- und Aufpumpanordnung nach Anspruch 2,
wobei das Rohr (50) eine Umfangsvertiefung (56) aufweist, die in dem zweiten Ende (55) des Rohres (50) ausgebildet ist und mit der Luftperforierung (57) des Rohres (50) in Verbindung steht.

4. Abdicht- und Aufpumpanordnung nach Anspruch 2,
wobei das Rohr (50) mindestens eine Umfangswulst (58) aufweist, die sich von ihm aus radial und nach außen erstreckt, um mit der Hülse (70) in Eingriff zu gelangen.

5. Abdicht- und Aufpumpanordnung nach Anspruch 2,
wobei das Rohr (50) eine Umfangsnut (59) aufweist, die in dem zweiten Ende (55) des Rohres (50) ausgebildet ist, und die Hülse (70) eine Umfangsverdickung (71) aufweist, die sich radial und nach innen erstreckt, um selektiv mit der Umfangsnut (59) des Rohres (50) in Eingriff zu gelangen und um die Hülse (70) an dem zweiten Ende (55) des Rohres (50) zu verankern und zu halten.

6. Abdicht- und Aufpumpanordnung nach Anspruch 1,
wobei die die zweite Rückschlagventilvorrichtung (6) ein Federelement (61) aufweist, das in der Umfangskammer (46) des Auslassstücks (40) aufgenommen ist und in Eingriff steht und mit dem Anschlagelement (60) zum Vorspannen des Anschlagelements (60) in Eingriff steht, um die Umfangskammer (46) des Auslassstücks (40) selektiv abzusperren und zu verschließen.

7. Abdicht- und Aufpumpanordnung nach Anspruch 1,
wobei das Rohr (50) einen in ihm ausgebildeten Umfangsabsatz (53) aufweist, um selektiv mit dem Anschlagelement (60) in Eingriff zu gelangen.

8. Abdicht- und Aufpumpanordnung nach Anspruch 1,
wobei das Auslassstück mindestens einen Stift (47) aufweist, der sich von der Umfangsbarriere (44) aus erstreckt, wobei das Auslassstück (40) ferner eine Abdeckung (63) aufweist, die an der Umfangsbarriere (44) befestigt ist, um die Umfangskammer (46) des Auslassstücks (40) selektiv abzusperren und zu verschließen, die Abdeckung (63) ferner mindestens eine Öffnung (64) aufweist, die in ihr ausgebildet ist, um mit dem mindestens einen Stift (47) der Umfangsbarriere (46) in Eingriff zu gelangen und um die Abdeckung (63) an der Umfangsbarriere (46) des Auslassstücks (40) zu verankern und zu positionieren, und die Abdeckung (63) mehrere Löcher (65) aufweist, die in ihr ausgebildet sind, um die Kammer (31) des Reifenreparaturbehälters (30) mit der Umfangskammer (46) des Auslassstücks (43) in Verbindung zu bringen.

## Revendications

1. Ensemble d'étanchement et de gonflage (1) comprenant :
un compresseur d'air (2) comportant un boîtier de cylindre (20) et un moteur (21) accouplé audit boîtier de cylindre (20) pour produire de l'air comprimé,
ledit boîtier de cylindre (20) comportant un tube de sortie (23) s'étendant vers l'extérieur depuis celui-ci et communiquant avec ledit boîtier de cylindre (20) pour recevoir l'air comprimé dudit boîtier de cylindre (20), et comprenant un orifice de sortie (24) placé sur ledit tube de sortie (23), un récipient de réparation de pneu (30) comportant un compartiment (31) formé dans celui-ci pour recevoir une préparation d'étanchement (32), et comportant une embouchure (33) formée dans celui-ci,
une pièce de sortie (40) fixée et assujettie à ladite embouchure (33) dudit récipient de réparation de pneu (30), et comprenant une entrée (41) destinée à être accouplée audit orifice de sortie (24) dudit tube de sortie (23), et comprenant un conduit d'entrée (42) formé dans celle-ci et en communication avec ladite entrée (41) pour guider l'air comprimé pour le faire passer dans ladite pièce de sortie (40) et le faire entrer dans ledit compartiment (31) dudit récipient de réparation de pneu (30), et comprenant un conduit de sortie (43) formé dans celle-ci et en communication avec ledit compartiment (31) dudit récipient de réparation de pneu (30) et décalé par rapport à ladite entrée (41) de ladite pièce de sortie (40) pour permettre à la préparation d'étanchement (32) présente dans ledit compartiment (31) dudit récipient de réparation de pneu (30) de sortir de manière sélective à travers ledit conduit de sortie (43) de ladite pièce de sortie (40), un tuyau (50) placé dans ledit compartiment (31) dudit récipient de réparation de pneu (30), et comprenant une première extrémité (51) accouplée audit conduit d'entrée (42) de ladite pièce de sortie (40), et comprenant un alésage (52) formé dans celui-ci et en communication avec ledit conduit d'entrée (42) de ladite pièce de sortie (40) pour diriger et guider le flux d'air comprimé à travers ledit alésage (52) du tuyau (50) et pour le faire entrer dans ledit compartiment (31) dudit récipient de réparation de pneu (30), et comprenant une deuxième extrémité (55) dans laquelle est formée une perforation à air (57) et en communication avec ledit alésage (52) du tuyau (50), et
un premier dispositif de clapet antiretour (7) monté sur ladite deuxième extrémité (55) du tuyau (50) pour commander de façon sélective le flux d'air comprimé pour qu'il entre dans ledit compartiment (31) dudit récipient de réparation de pneu (30), et pour empêcher la préparation d'étanchement (32) d'entrer dans ledit alésage (52) dudit tuyau (50), **caractérisé en ce que**
ladite pièce de sortie (40) comprend un deuxième dispositif de clapet antiretour (6) placé entre ledit tuyau (50) et ledit conduit de sortie (43) de ladite pièce de sortie (40) pour commander de façon sélective l'écoulement sortant de la préparation d'étanchement (32) à travers ledit conduit de sortie (43) de ladite pièce de sortie (40),
ladite pièce de sortie (40) comprend une barrière périphérique (44) qui s'étend depuis celle-ci pour former une chambre périphérique (46) entre ladite barrière périphérique (44) et ledit tuyau (50), et ledit deuxième dispositif de clapet antiretour (6) comprend un élément d'arrêt (60) reçu de façon glissante et engagé dans ladite chambre périphérique (46) de ladite pièce de sortie (40) pour bloquer et enfermer de façon sélective ladite chambre périphérique (46) de ladite pièce de sortie (40) et pour empêcher la préparation d'étanchement (32) de sortir par ledit conduit de sortie (43) de ladite pièce de sortie (40).

2. Ensemble d'étanchement et de gonflage selon la revendication 1, dans lequel ledit premier dispositif de clapet antiretour (7) comprend un manchon résilient (70) monté sur ladite deuxième extrémité (55) du tuyau (50) pour bloquer de façon sélective ladite perforation à air (57) dudit tuyau (50).

3. Ensemble d'étanchement et de gonflage selon la revendication 2, dans lequel ledit tuyau (50) comprend une gorge périphérique (56) formée dans ladite deuxième extrémité (55) dudit tuyau (50) et en communication avec ladite perforation à air (57) dudit tuyau (50).

4. Ensemble d'étanchement et de gonflage selon la revendication 2, dans lequel ledit tuyau (50) comprend au moins un renflement périphérique (58) s'étendant radialement et vers l'extérieur depuis celui-ci pour se mettre en prise avec ledit manchon (70).

5. Ensemble d'étanchement et de gonflage selon la revendication 2, dans lequel ledit tuyau (50) comprend une rainure périphérique (59) formée dans ladite deuxième extrémité (55) dudit tuyau (50), et ledit manchon (70) comprend un gonflement périphérique (71) s'étendant radialement et vers l'intérieur pour se mettre en prise de façon sélective avec ladite rainure périphérique (59) dudit tuyau (50) et pour accrocher et retenir ledit manchon (70) sur ladite deuxième extrémité (55) du tuyau (50).

6. Ensemble d'étanchement et de gonflage selon la revendication 1, dans lequel ledit deuxième dispositif de clapet antiretour (6) comprend un élément de sollicitation par ressort (61) reçu et engagé dans ladite chambre périphérique (46) de ladite pièce de sortie (40) et en prise avec ledit élément d'arrêt (60) pour pousser ledit élément d'arrêt (60) pour bloquer et enfermer de façon sélective ladite chambre périphérique (46) de ladite pièce de sortie (40).

7. Ensemble d'étanchement et de gonflage selon la revendication 1, dans lequel ledit tuyau (50) comprend un épaulement périphérique (53) formé dans celui-ci pour se mettre en prise de façon sélective avec ledit élément d'arrêt (60).

8. Ensemble d'étanchement et de gonflage selon la revendication 1, dans lequel ladite pièce de sortie comprend au moins un ergot (47) s'étendant depuis ladite barrière périphérique (44), ladite pièce de sortie (40) comprend en outre un couvercle (63) fixé sur ladite barrière périphérique (44) pour bloquer et enfermer de façon sélective ladite chambre périphérique (46) de ladite pièce de sortie (40), ledit couvercle (63) comprend en outre au moins un orifice (64) formé dans celui-ci et destiné à se mettre en prise avec ledit au moins un ergot (47) de ladite barrière périphérique (46) et pour accrocher et positionner ledit couvercle (63) sur ladite barrière périphérique (46) de ladite pièce de sortie (40), ledit couvercle (63) comprend une pluralité d'ouvertures (65) formées dans celui-ci pour faire communiquer ledit compartiment (31) du récipient de réparation de pneu (30) avec ladite chambre périphérique (46) de ladite pièce de sortie (43).
